# EUROPEAN PATENT SPECIFICATION

(11) **EP 0 927 940 B1**
(45) Date of publication and mention of the grant of the patent: **04.10.2000**
(21) Application number: 97204156.0
(22) Date of filing: 31.12.1997
(51) Int. Cl.: G06F 17/30

(54) **Database and method for building a database**
Datenbank und Verfahren zum Erstellen einer Datenbank
Base de données et procédé de construction d'une base de données

(43) Date of publication of application: 07.07.1999
(73) Proprietor: The Explorid Group B.V., 2719 TV ZOETERMEER (NL)
(72) Inventor: Poels, Paulus Antonius, 3708 HP Zeist (NL); De Regt, Marcelinus Wilhelmus, 2151 SC Nieuw-Vennep (NL)
(74) Representative: de Bruijn, Leendert C.

(56) References cited:
- EP-A- 0 079 465
- EP-A- 0 351 786
- WO-A-97/32263

## Description

### FIELD OF THE INVENTION

The invention relates to a method for creating a database starting with files, each file comprising one or more records, each record referring to a different identity and containing data items about various subjects related to said identity,
whereby data items are stored in subject tables such that data items about the same subject but related to different identities are stored in a specific subject table,
whereby in each table any data item is stored only once.

The invention furthermore relates to a database created in agreement with the above mentiond method.

### STATE OF THE ART

A method as described in the first paragraph is known from EP-0351786. This prior art publication describes especially a data storage apparatus for managing data of individual names, telephone numbers and the like.

The apparatus comprises a number of first storage means each storing a table of data items about the same subject. For instance, the first table contains names of companies, the second table contains names of employees, the third table contains telephone numbers, etc. Each entry in said tables is characterised by its address in the respective table.

The apparatus comprises furthermore a second storage means divided into records each assigned to one individual. Each record contains for the respective individual a combination of addresses of the tables in the first storage means. In this way each individual is linked to a company, to a telephone number, etc.

This prior art apparatus only stores data records in an space efficient manner. The width of each table can be restricted dependent on the largest entry and each table only comprises unique entries, for instance , the name of a company employing a large number of employees is entered only once. In comparison with a a database with records which for each individual hold the company name as a separate entry a significant reduction of memory space can be realised.

This prior art apparatus does not store data about relations between the various subjects. The database in this prior art apparatus is certainly not a relational database.

According to the state of the art building a relational database requires analysing the data to be stored in the database, predefining the various relations between the data, making a structural and functional design and finally generating the necessary software.

Possible problems with existing databases could arise in relation to:
- adding new data
- adding new relations
- formulating queries
- adding additional fields
- etc

### OBJECT OF THE INVENTION

An object of the invention is now to avoid the whole analysing and programming process and to provide a method for developing a database without the necessity to analyse beforehand the data to be stored in the database, to predefine the various relations between the data, and to make a structural and functional design. The database according to the invention should be very flexible and can be extended with new fields and new data without any restrictions. The structure of the database has to be such that relations do not have to be predefined but are established in use.

### SPECIFICATION OF THE INVENTION

In agreement with this object the invention as defined in claim 1 provides a method of the type specified in the first paragraph which is characterised in that
- first data items about subjects which identify the identity (PERSON, ADDRESS, BUSINESS, etc,) are all stored in an identity table,
- second data items about other subjects (MARKS) are all stored in a subject table,
- whereby each relation describing which data item in an identity table and which data item in the subject table are retrieved from the same record are stored in a relations table (RELATIONS).

In general one is able to distinguish between identities of different type such as a person, a business, a communication, a transaction, an address, an occurrence, etc. It is preferred that, if identities can be discriminated into identities of different type, for each type of identity the first data items are transferred to a separate identity table.

In this way all data items are stored in tables. If a new type of identity is found in the input data simply a new table is created. All relations between these tables are stored in one relation table which in fact represents the stored "knowledge".

Additional information can be retrieved from the tables if in agreement with a predetermined embodiment of the invention the relations in the relations table are regularly inspected to find relations which have one subject in common (X is related to Y and Z is related to Y) in which case a relation between the two other subjects based on the common subject is added to the relations table (X is related to Z based on Y).

To avoid working with names it is preferred that a unique table identification code is added to each table. It is also preferred that a unique entry identification code is added to each entry in an identity table or in the subject table.

The introduction of unique identification codes enables a significant reduction of the contents of each entry in the relations table. In stead of using descriptions, words etc. the relations in the relation table are entered as combinations of entry identification codes and table identification codes.

It is remarked that coding schemes for databases are already known from the prior art.

A first example is known from EP-0079465. In this publication a method is described whereby the contents of each field is transferred to an alphabetically ordered table. Double entries are removed and the remaining unique entries are coded by means of the address or number of the respective entry in the table. The original contents of each field in the database is now replaced by said address or number. The result thereof is a considerable reduction in memory space. Queries are "translated" by means of the table into an address or number (or combination thereof) and performed. The answers "translated back" by means of the table and presented.

A second example of a coding scheme is found in WO-9732263 which can be considered as a further devellopment of the above described first scheme. In stead using only ontable in which the contents of each field of the database is transferred, a number of tables is applied. The contents of corresponding fields or a group of fields of similar type (called a domain) are transferred to different tables. The advantage thereof is that the contents of fields containing in general small entries can be transferred to a table with restricted width resulting into a further reduction of the necessary memory space.

The only purpose of these coding schemes is to restrict the necessary memory space and to use the available memory space in an optimal manner.

It is remarked again that the underlying invention does not provide a coding scheme but provides a method for retrieving relational data from a flat (non-relational) database comprising just one or more records each consisting of a number of fields.

The invention is not only related to a method for building a database but is also related to the database itself. In this respect the invention provides a database as defined in claim 10.

The invention will be explained in more detail with reference to the attached drawings.

### DEFINITION OF THE DRAWINGS

Figure 1 illustrates schematically a model of a very simple embodiment of a database according to the invention comprising data of only one type of identity nl. persons

Figure 2 illustrates schematically a more developed model of an embodiment of a database according to the invention comprising data of two types of identities nl. persons and addresses.

Figure 3 illustrates schematically a general model of a more sophisticated embodiment of a database according to the invention comprising data about different types of identities.

Please remark that the lines in all figures do not indicate predefined relations, but in stead do indicate relations which during application of the inventive method will gradually devellop.

### DETAILED SPECIFICATION

### Simple embodiment

The invention will first be described in relation to a rather simple embodiment thereof. The method according to the invention will be performed on a file which is related to a number of different persons of which are stored name, address, sex, birthday, salary level (high, medium or low), means of transport (car or bike or none) and housing conditions (own house or rented house).

In agreement with the invention an identity can be identified by statical marks being non alterable features which are characteristic for a specific identity. An the example of an identity is a person which e.g. can be identified by its name, sex, birthdate, birthplace, etc. All these features can be considered as fixed and not alterable for a specific person. The more statistical marks of a person are known, the better the person is identified and can be distinguished from other persons. However in some cases only one mark can be sufficient to discriminate between a large number of persons, e.g. the unique fiscal number or social security number for all persons within a country.

In agreement with the invention an identity can have furthermore relations with dynamical marks being alterable features which are not specifical for one identity but can be shared by more identities. A person e.g. rides a specific car, owns a house, earns a specific salary, prefers a holiday in Spain, etc.

It is assumed that each record of an exemplary file has a number of fields containing the following data:
name/sexe/birthday/salary/transport means/housing.
In this record the identity identifying first data items are:
name/sexe/birthday
and the second data items are:
salary/transport means/house
The exemplary file contains the following six records:

| Name | Sex | Birthday | salary | Transp | House |
|---|---|---|---|---|---|
| name1 | M | 27041944 | medium | car | own |
| name2 | M | 18071933 | high | car | rent |
| name3 | M | 02111975 | low | bike | |
| name4 | F | 13111967 | medium | bike | rent |
| name5 | M | 18071920 | high | car | rent |
| name6 | F | 19051950 | | bike | |

In agreement with the method according to the invention the first and second data items are put into two separate tables, an identity table indicated in this example as the PERSON table and a further table indicated as the MARKS table. During this process a unique identification number Id is added to each entry in the tables:

| table PERSON | | | | table MARKS | |
|---|---|---|---|---|---|
| Id | Name | Sex | Birthday | Id | type |
| 1 | name1 | M | 27041944 | 1 | medium salary |
| 2 | name2 | M | 18071933 | 2 | high salary |
| 3 | name3 | M | 02111975 | 3 | low salary |
| 4 | name4 | F | 13111967 | 4 | bike |
| 5 | name5 | M | 18071920 | 5 | car |
| 6 | name6 | F | 19051950 | 6 | own house |
| | | | | 7 | rented house |

With only these two tables a lot of information would be lost. From the original file it is clear that the person with namel earns a medium salary and drives a car. That kind of information should be maintained and for that reason a third table is created called the RELATIONS table. Each entry in the relations table indicates a relation between an entry in the PERSONS table and an entry in the MARKS table. The fact that the person with name4 (entry 4 in table PERSONS) earns a medium salary (entry 1 in the table MARKS) is represented in the table RELATIONS as:
person 4 marks 1.
The fact that the person with name6 (entry 6 in table PERSONS) drives a bike (entry 4 in the table MARKS) is found in the table RELATIONS as: person 6 marks 4
After establishing all possible relations the whole table RELATIONS looks like:

| Table RELATIONS | | | |
|---|---|---|---|
| table | id | table | id |
| person | 1 | marks | 1 |
| person | 1 | marks | 5 |
| person | 1 | marks | 6 |
| person | 2 | marks | 2 |
| person | 2 | marks | 5 |
| person | 2 | marks | 7 |
| person | 3 | marks | 3 |
| person | 3 | marks | 4 |
| person | 4 | marks | 1 |
| person | 4 | marks | 4 |
| person | 4 | marks | 7 |
| person | 5 | marks | 2 |
| person | 5 | marks | 5 |
| person | 5 | marks | 7 |
| person | 6 | marks | 4 |

This combination of tables already provides very quick answers to questions as:
"How many persons have a medium salary"
"How many persons live in a rented house"
By simply adding an index or flag to each person in the table PERSON for which in the table RELATIONS an indication to "marks 1" is found, and counting the number of flags the first question can be answered (answer is 2). By simply adding an index or flag to each person in the table PERSON for which in the table RELATIONS an indication to "marks 7" is found and counting the number of flags the second question can be answered (answer is 3).

Also more complicated questions such as:
"How many persons with a medium salary live in a rented house"
can be answered very easily by adding a first flag to each person in the table PERSON for which in the table RELATIONS an indication to "marks 1" is found and adding a second flag to each person in the table PERSON for which in the table RELATIONS an indication to "marks 7" is found and counting the number of persons who have received a double flag (answer is 1).

Also questions such as :
"How many males earn a high salary."
can be dealt with. In the same manner as explained above flags are placed in the table PERSON for each person with an indication M in the column 'sex'. Further flags are placed in the table PERSON for each person with the indication "marks 2" in the table RELATIONS. Counting the number of persons with two flags provides the answer (2).

### Further developed embodiment

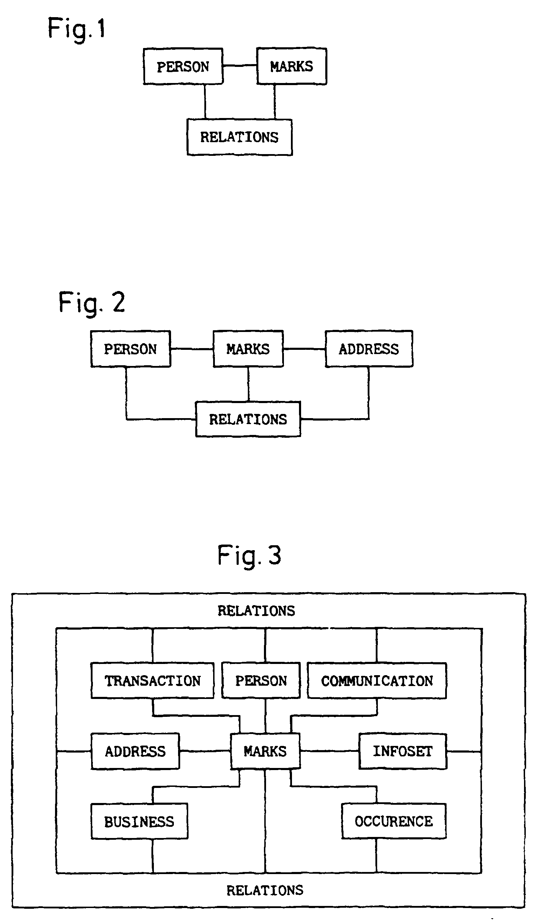

In the above example the records of the file contained only data related to persons. As already remarked a person is only one of the identities of which data can be stored in the database. Another important identity is the address. Figure 2 illustrates the datamodel in case two identities 'person' and 'address' are present in the database. As a practical example the above provided example file could be extended e.g.into:

| Name | address | Sex | Birthday | salary | Transp | House |
|---|---|---|---|---|---|---|
| name1 | address1 | M | 27041944 | medium | car | own |
| name2 | address2 | M | 18071933 | high | car | rent |
| name3 | address1 | M | 02111975 | low | bike | |
| name4 | address4 | F | 13111967 | medium | bike | rent |
| name5 | address5 | M | 18071920 | high | car | rent |
| name6 | address1 | F | 19051950 | | bike | |

The tabulating process according to the invention in this case results in two identity tables PERSON and ADDRESS, the MARKS table and the RELATIONS table:

| table PERSON | | | | table ADDRESS | | table MARKS | |
|---|---|---|---|---|---|---|---|
| Id | Name | Sex | Birthday | Id | address | Id | type |
| 1 | name1 | M | 27041944 | 1 | address1 | 1 | medium salary |
| 2 | name2 | M | 18071933 | 2 | address2 | 2 | high salary |
| 3 | name3 | M | 02111975 | 3 | address4 | 3 | low salary |
| 4 | name4 | F | 13111967 | 4 | address5 | 4 | bike |
| 5 | name5 | M | 18071920 | | | 5 | car |
| 6 | name6 | F | 19051950 | | | 6 | own house |
| | | | | | | 7 | rented house |

| Table RELATIONS | | | | | | | |
|---|---|---|---|---|---|---|---|
| table | id | table | id | table | id | table | id |
| person | 1 | address | 1 | person | 4 | address | 3 |
| person | 1 | marks | 1 | person | 4 | marks | 1 |
| person | 1 | marks | 5 | person | 4 | marks | 4 |
| person | 1 | marks | 6 | person | 4 | marks | 7 |
| person | 2 | address | 2 | person | 5 | address | 4 |
| person | 2 | marks | 2 | person | 5 | marks | 2 |
| person | 2 | marks | 5 | person | 5 | marks | 5 |
| person | 2 | marks | 7 | person | 5 | marks | 7 |
| person | 3 | address | 1 | person | 6 | address | 1 |
| person | 3 | marks | 3 | person | 6 | marks | 4 |
| person | 3 | marks | 4 | | | | |

It was found that there are three persons with the same address. Thus, on the basis of this address there is a relation between persons 1, 3 and 6. These relations are added to the relations table with the indication of the type of relation:

| table RELATIONS (continued) | | | | |
|---|---|---|---|---|
| table | id | table | id | type |
| person | 1 | person | 3 | address |
| person | 1 | person | 6 | address |
| person | 3 | person | 6 | address |

### Ultimate embodiment

Figure 3 illustrates a datamodel of the ultimate embodiment covering a number of different identities. In general the database build according to this concept will be used to gather and accumulate data about different identities which can be defined for instance as:
- an identity =: a person or
a business or
a communication or
a transaction or
an address or
an occurrence or......

As explained already above each identity can be identified by statical marks being non alterable features which are characteristic for a specific identity. A person e.g. can be identified by its name, sex, birthdate, etc. All these features are fixed for a specific person. The more statistical marks of a person are known, the better the person is identified and can be distinguished from other persons.

Furthermore an identity can have relations with dynamical marks being alterable features which are not specifical for one identity but can be shared by more identities. A person e.g. rides a specific car, owns a house, earns a specific salary, is a client of shop Q, visits restaurant B, etc.

Statical marks of a company are e.g. name, founding date, founding place, identification number in the register of the chamber of commerce, fiscal number. etc.

Statical marks of a communication are the name of the communication expression, reference number, etc.

Statical marks of an address are the name of the street, the number of the house, postal code etc.

Statical marks of a transaction are the sold/bought object, the transaction date, the invoice number, etc.

Statistical marks of an occurrence are type of occurrence, name of the occurrence, date of the occurrence, etc.

To develop the above provided example still further assume that a car dealer stores all his sales in a file which has the following fields:
registration-nr/brand+model/salesdate/client/address/
The exemplary file contains the following four records:

| registration-nr | brand+model | salesdate | buyer | address |
|---|---|---|---|---|
| TK-54-SF | Vovo-model1 | 02041993 | name2 | address2 |
| GR-28-DD | Mazda-model1 | 13091993 | name9 | address12 |
| UH-40-TR | Volvo-model2 | 22071994 | name8 | address14 |
| MN-76-PP | Volvo-model1 | 25071995 | name4 | address5 |

This file contains in fact a transaction identity represented by the registration number whereby brand+model and salesdate are identifying marks. The data about the buyers will be transferred to the already existing table PERSONS and the data about the addresses will be transferred to the already existing table ADDRESS. Note that name2 and name4 are already entered in the table PERSON. The same applies to address2 and address5.

The name of the car dealer who delivered the file forms the first entry in a further table BUSINESS.
After tabulating this data the tables TRANSACTIONS, PERSON, ADDRESS and MARKS will look as:

| table TRANSACTIONS | | | | table BUSINESS |
|---|---|---|---|---|
| id | reg-nr | brand+model | salesdate | id companyname |
| 1 | TK-54-SF | Vovo-model1 | 02041993 | 1 cardealer |
| 2 | GR-28-DD | Mazda-model1 | 13091993 | |
| 3 | UH-40-TR | Volvo-model2 | 22071994 | |
| 4 | MN-76-PP | Volvo-model1 | 25071995 | |

| table PERSON | | | | table ADDRESS | | table MARKS | |
|---|---|---|---|---|---|---|---|
| Id | Name | Sex | Birthday | Id | address | Id | type |
| 1 | name1 | M | 27041944 | 1 | address1 | 1 | medium salary |
| 2 | name2 | M | 18071933 | 2 | address2 | 2 | high salary |
| 3 | name3 | M | 02111975 | 3 | address4 | 3 | low salary |
| 4 | name4 | F | 13111967 | 4 | address5 | 4 | bike |
| 5 | name5 | M | 18071920 | 5 | address12 | 5 | car |
| 6 | name6 | F | 19051950 | 6 | address14 | 6 | own house |
| 7 | name9 | | | | | 7 | rented house |
| 8 | name8 | | | | | | |

| Table RELATIONS | | | | | | | | |
|---|---|---|---|---|---|---|---|---|
| table | id | table | id | type | table | id | table | id type |
| person | 1 | address | 1 | | person | 4 | address | 3 |
| person | 1 | marks | 1 | | person | 4 | marks | 1 |
| person | 1 | marks | 5 | | person | 4 | marks | 4 |
| person | 1 | marks | 6 | | person | 4 | marks | 7 |
| person | 2 | address | 2 | | person | 5 | address | 4 |
| person | 2 | marks | 2 | | person | 5 | marks | 2 |
| person | 2 | marks | 5 | | person | 5 | marks | 5 |
| person | 2 | marks | 7 | | person | 5 | marks | 7 |
| person | 3 | address | 1 | | person | 6 | address | 1 |
| person | 3 | marks | 3 | | person | 6 | marks | 4 |
| person | 3 | marks | 4 | | | | | |
| person | 1 | person | 3 | address | | | | |
| person | 1 | person | 6 | address | | | | |
| person | 3 | person | 6 | address | | | | |
| person | 7 | address | 5 | | | | | |
| person | 8 | address | 6 | | | | | |
| trans | 1 | person | 2 | transaction | | | | |
| trans | 2 | person | 7 | transaction | | | | |
| trans | 3 | person | 8 | transaction | | | | |
| trans | 4 | person | 4 | transaction | | | | |
| busin | 1 | person | 2 | transaction | | | | |
| busin | 1 | person | 7 | transaction | | | | |
| busin | 1 | person | 8 | transaction | | | | |
| busin | 1 | person | 4 | transaction | | | | |

### Conversion

In general the files destined to become accumulated in the database will have a data format which is not consistent with the dataformat used in the database. Therefor, in general a conversion process will precede the above described tabulating process.

In the conversion process all data records of a file are reformatted such that the format of each field or data item in each record corresponds to a predetermined preferred format in the ultimate database. For instance a birthday (or any other data) can be described in a number of different formats such as:
DDMMYY
DDMMYYYY
MMDDYY
MMDDYYYY
YYMMDD
YYYYMMDD
Wherein DD = day, MM = month, YY = year without century and YYYY = year with century.

Suppose that in the database according to the invention the format DDMMYYYY is preferred and that in the first file all dates has the format DDMMYY. In that case during the first step of the invention the reformatting operation DDMMYY _ DDMMYYYY has to be performed.

In practice different formats are used for storing a person's name. For instance, a person called Henk Jan de Vries could be stored in a data record as:
Henk Jan de Vries
HJ de Vries
H.J. de Vries
Vries H.J. de
Vries HJ de

If it is assumed that in de database according to the invention the third format is preferred and that in the first file the second is used the a suitable reformatting operation has to be performed to store each name as a successive order of first name initials separated by dots, prefix, family name.

If necessary similar operations can be performed on all other data.

As such reformatting operations of this known are known and therefore further detailed explanation is considered superfluous.

### Export

In many cases the method according to the invention will be used to build a database for a specific client which on the one hand supplies the input files and on the other hand likes to receive a database in the above described tabulated form and with a dataformat consistent with the dataformat of the input files. The last requirement implies that the entries in the varies tables have to be reconverted to the original dataformat. To perform such operation automatically substantially without any assistance of a human operator an additional table called INFORMATION SET is added to the already present collection of tables. This table contains all statistical variables of an information set such as:
- an identification of the input file
- name and further details of the owner/supplier of the original input file
- details about all the various conversions which were performed on the original data to obtain a file ready for tabulating. These details will enable the automatic reconversion of the data once it is tabulated.

In the above examples we have used two different files, filel containing data related to the entries 1-6 in the table PERSON and file2 containing the data related to the entries 1-4 in the TRANSACTIONS table.

At this moment therefor the table INFORMATION SET looks as:

| table INFORMATION SET | |
|---|---|
| 1d | source |
| 1 | file1 |
| 2 | file2 |

Finally the table RELATIONS hs to be extended by the following entries:

| table | id | table |
|---|---|---|
| person | 1 | infoset 1 |
| person | 2 | infoset 1 |
| person | 3 | infoset 1 |
| person | 4 | infoset 1 |
| person | 5 | infoset 1 |
| person | 6 | infoset 1 |
| trans | 1 | infoset 2 |
| trans | 2 | infoset 2 |
| trans | 3 | infoset 2 |
| trans | 4 | infoset 2 |

### Functional environment

Especially in case the database grows larger and larger each time a file is added it will take more time to perform the conversion, to carry out the actual inventive method steps leading to the tabulated structure and eventually to export a database to measure. To avoid waiting times it is preferred that the various operations are performed each in its own environment functioning simultaneously.

## Claims

1. Method for creating a database starting with files, each file comprising one or more records, each record referring to a different identity and containing data items about various subjects related to said identity,
whereby data items are stored in subject tables such that data items about the same subject but related to different identities are stored in a specific subject table,
whereby in each table any data item is stored only once,
characterised in that
- first data items about subjects which identify the identity (PERSON, ADDRESS, BUSINESS, etc,) are all stored in an identity table,
- second data items about other subjects (MARKS) are all stored in a subject table,
- whereby each relation describing which data item in an identity table and which data item in the subject table are retrieved from the same record are stored in a relations table (RELATIONS).

2. Method according to claim 1 whereby, if identities can be discriminated into identities of different type, for each type of identity the first data items are transferred to a separate identity table.

3. Method according to claim 1 or 2, whereby the relations in the relations table are regularly inspected to find relations which have one subject in common (X is related to Y and Z is related to Y) in which case a relation between the two other subjects based on the common subject is added to the relations table (X is related to Z based on Y).

4. Method according to one of the preceding claims, whereby a unique table identification code is added to each table.

5. Method according to one of the preceding claims, whereby a unique entry identification code (Id) is added to each entry in an identity table or in the subject table.

6. Method according to claim 4 and 5, whereby the relations in the relation table are entered as combinations of entry identification codes and table identification codes.

7. Method according to one of the preceding claims, whereby a unique file identification number is assigned to each file of which the data is added to the database, the file identification numbers are accumulated in a file table, and for each identity the relation with the respective file number is added to the relation table.

8. Method according to any of the preceding claims, whereby before carrying out any of the steps defined in the previous claims the database the datastructure of the various data items are, if necessary, converted to a predefined structure.

9. Method according to claim 8, whereby the used conversion rules are stored into the file table.

10. Database for storing data related to identities, said data containing data items about various subjects related to said identities,
whereby data items are stored in subject tables such that data items about the same subject but related to different identities are stored in a specific subject table,
whereby in each table any data item is stored only once, characterised in that
- first data items about subjects which identify the identity are accumulated in an identity table,
- second data items about other subjects are accumulated in a subject table,
- whereby each relation, describing relations between an entry in an identity table and an entry in the subject table are stored in a relations table.

## Patentansprüche

1. Verfahren zur Erstellung einer Datenbank ausgehend von Dateien, wobei jede Datei einen oder mehrere Datensätze umfaßt, wobei jeder Datensatz eine andere Identität betrifft und Datenelemente über verschiedene, identitätsbezogene Subjekte enthält, wobei die Datenelemente in Subjekttabellen gespeichert werden, derart, daß Datenelemente über das gleiche Subjekt, die sich jedoch auf verschiedene Identitäten beziehen, in einer speziellen Subjekttabelle gespeichert werden, wobei in jeder Tabelle jedes Datenelement nur einmal gespeichert wird,
**dadurch gekennzeichnet,** daß
- erste Datenelemente über Subjekte, die die Identität identifizieren (PERSON, ADRESSE, UNTERNEHMEN, usw.), sämtlich in einer Identitätstabelle gespeichert werden,
- zweite Datenelemente über andere Subjekte (KENNZEICHEN) sämtlich in einer Subjekttabelle gespeichert werden,
- wobei jede Relation, die beschreibt, welches Datenelement in einer Identitätstabelle und welches Datenelement in der Subjekttabelle aus dem gleichen Datensatz gewonnen wurden, in einer Relationentabelle (RELATIONEN) gespeichert wird.

2. Verfahren nach Anspruch 1, bei dem - sofern die Identitäten in Identitäten verschiedener Art unterschieden werden können - für jede Identitätsart die ersten Datenelemente in eine gesonderte Identitätstabelle übertragen werden.

3. Verfahren nach Anspruch 1 oder 2, bei dem die Relationen in der Relationentabelle regelmäßig untersucht werden, um Relationen zu finden, die gemeinsam ein Subjekt aufweisen (X ist mit Y verknüpft und Z ist mit Y verknüpft), in welchem Fall eine Relation zwischen den zwei anderen Subjekten auf Grundlage des gemeinsamen Subjekts zu der Relationentabelle hinzugefügt wird (X ist mit Z auf Grundlage von Y verknüpft).

4. Verfahren nach einem der vorhergehenden Ansprüche, bei dem zu jeder Tabelle ein eigener Tabellenidentifikationscode hinzugefügt wird.

5. Verfahren nach einem der vorhergehenden Ansprüche, bei dem zu jedem Eintrag in einer Identitätstabelle oder in der Subjekttabelle ein eigener Eintragsidentifikationscode (Id) hinzugefügt wird.

6. Verfahren nach Anspruch 4 oder 5, bei dem die Relationen in der Relationentabelle als Kombinationen von Eintragsidentifikationscodes und Tabellenidentifikationscodes eingetragen werden.

7. Verfahren nach einem der vorhergehenden Ansprüche, bei dem jeder Datei, deren Daten zu der Datenbank hinzugefügt werden, eine eigene Dateiidentifikationsnummer zugeordnet wird, die Dateiidentifikationsnummern in einer Dateitabelle gesammelt werden und für jede Identität die Relation zu der jeweiligen Dateinummer zur Relationentabelle hinzugefügt wird.

8. Verfahren nach einem der vorhergehenden Ansprüche, bei dem die Datenstruktur der verschiedenen Datenelemente - sofern nötig - in eine im voraus festgelegte Struktur umgewandelt wird, bevor die in den vorhergehenden Ansprüchen angegebenen Schritte ausgeführt werden.

9. Verfahren nach Anspruch 8, bei dem die angewandten Umwandlungsregeln in der Dateitabelle gespeichert werden.

10. Datenbank zur Speicherung von identitätsbezogenen Daten, wobei die Daten Datenelemente über verschiedene, auf die Identitäten bezogene Subjekte enthalten, wobei die Datenelemente in Subjekttabellen gespeichert sind, derart, daß Datenelemente über das gleiche Subjekt, die sich jedoch auf unterschiedliche Identitäten beziehen, in einer speziellen Subjekttabelle gespeichert sind, wobei in jeder Tabelle jedes Datenelement nur einmal gespeichert ist,
**dadurch gekennzeichnet,** daß
- erste Datenelemente über Subjekte, die die Identität identifizieren, in einer Identitätstabelle gesammelt sind,
- zweite Datenelemente über andere Subjekte in einer Subjekttabelle gesammelt sind,
- wobei jede Relation, die Zusammenhänge zwischen einem Eintrag in einer Identitätstabelle und einem Eintrag in der Subjekttabelle beschreibt, in einer Relationentabelle gespeichert ist.

## Revendications

1. Procédé permettant de créer une base de données à partir de fichiers, chaque fichier comprenant un ou plusieurs enregistrements, chaque enregistrement se rapportant à une identité différente et contenant des éléments de données relatifs à divers sujets liés à ladite identité,
- où les éléments de données sont stockés dans des tables de sujets de façon que les éléments de données relatifs au même sujet, mais liés à des identités différentes, soient stockés dans une table de sujets particulière,
- où, dans chaque table, tout élément de données n'est stocké qu'une seule fois,
caractérisé en ce que :
- des premiers éléments de données se rapportant à des sujets qui identifient l'identité (PERSONNE, ADRESSE, AFFAIRES, etc.) sont tous stockés dans une table d'identités,
- des deuxièmes éléments de données se rapportant à d'autres sujets (INDICATEURS) sont tous stockés dans une table de sujets,
- où chaque relation décrivant quel élément de données d'une table d'identités et quel élément de données de la table de sujets sont retrouvés à partir du même enregistrement est stockée dans une table de relations (RELATIONS).

2. Procédé selon la revendication 1, où, si des identités peuvent être distinguées en identités de types différents, pour chaque type d'identité, les premiers éléments de données sont transférés dans une table d'identités séparée.

3. Procédé selon la revendication 1 ou 2, où les relations contenues dans la table de relations sont régulièrement inspectées afin que soient découvertes des relations qui ont un sujet en commun (X est relié à Y et Z est relié à Y), auquel cas une relation entre les deux autres sujets sur la base du sujet commun est ajoutée dans la table de relations (X est relié à Z sur la base de Y).

4. Procédé selon l'une quelconque des revendications précédentes, où un code d'identification de table unique est ajouté à chaque table.

5. Procédé selon l'une quelconque des revendications précédentes, où un code d'identification d'entrée unique (Id) est ajouté à chaque entrée d'une table d'identités ou de la table de sujets.

6. Procédé selon la revendication 4 ou 5, où les relations présentes dans la table de relations sont introduites sous forme de combinaisons de codes d'identification d'entrée et de codes d'identification de table.

7. Procédé selon l'une quelconque des revendications précédentes, où un numéro d'identification de fichier unique est affecté à chaque fichier dont les données sont ajoutées à la base de données, les numéros d'identification de fichier s'accumulent dans une table de fichiers, et, pour chaque identité, la relation avec le numéro de fichier respectif est ajoutée dans la table de relations.

8. Procédé selon l'une quelconque des revendications précédentes, où, avant que ne soit effectuée l'une quelconque des opérations définies dans les revendications précédentes, la base de données et la structure de données des divers éléments de données sont, si nécessaires, converties en une structure prédéfinie.

9. Procédé selon la revendication 8, où les règles de conversion utilisées sont stockées dans la table de fichiers.

10. Base de données servant à stocker des données liées à des identités, lesdites données contenant des éléments de données se rapportant à divers sujets liés auxdites identités,
- où des éléments de données sont stockées dans des tables de sujets de façon que des éléments de données se rapportant au même sujet, mais liés à des identités différentes, soient stockés dans une table de sujets particulière,
- où, dans chaque table, tout élément de données n'est stocké qu'une seule fois,
caractérisé en ce que des premiers éléments de données se rapportant à des sujets qui identifient l'identité sont accumulés dans une table d'identités,
- des deuxièmes éléments de données se rapportant à d'autres sujets sont accumulés dans une table de sujets,
- où chaque relation, décrivant des relations entre entrée d'une table d'identités et une entrée de la table de sujets, est stockée dans une table de relations.
